# EUROPEAN PATENT SPECIFICATION

(11) **EP 0 718 432 B1**
(45) Date of publication and mention of the grant of the patent: **02.10.2002**
(21) Application number: 95308711.1
(22) Date of filing: 01.12.1995
(51) Int. Cl.: D06M 15/643, D06N 3/12, C09D 183/04

(54) **Curable coating compositions**
Hartbare Beschichtungszusammensetzungen
Compositions de revêtement durcissable

(30) Priority: 06.12.1994 GB 9424602
(43) Date of publication of application: 26.06.1996
(73) Proprietor: DOW CORNING LIMITED, South Glamorgan CF63 2YL Wales (GB)
(72) Inventor: Collins, Allan, Llandaff, Cardiff (GB)
(74) Representative: Vandamme, Luc Johan Roger

(56) References cited:
- EP-A- 0 497 349
- EP-A- 0 510 608
- EP-A- 0 543 401
- EP-A- 0 553 840
- EP-A- 0 681 014

## Description

This invention is concerned with curable coating compositions which adhere well to a variety of substrates.

Coating compositions are known which cure by a hydrosilylation reaction without producing undesirable byproducts. However, the said coating compositions do not adhere well to certain substrates, for example, synthetic textiles.

Priming a substrate with a primer composition prior to applying a curable coating composition is an effective solution. Primers are adequate to provide strong adhesion between a cured coating composition and a substrate. However, this solution suffers from the disadvantage that the coating process requires at least two steps, one step of which involves waiting for the applied primer composition to dry.

Self-adhering coating compositions are known which cure by a hydrosilylation reaction. They contain additives which aid adhesion to a variety of substrates, obviating the need for application of a primer composition prior to coating.

One example of a self-adhering coating composition is described in US 4,087,585 wherein a coating composition curable by a hydrosilylation reaction is disclosed which comprises an adhesion promoting additive consisting essentially of a polyorganosiloxane containing a silicon bonded hydroxyl group, a silicon-bonded vinyl group and an epoxy silane.

US 4,754,013 discloses a self-adhering coating composition curable by a hydrosilylation reaction which comprises an adhesion promoting additive consisting essentially of at least one hydroxyl terminated polydiorganosiloxane, at least one silane containing at least three alkoxy groups per molecule and a titanium compound as a catalyst.

The prior art compositions cited above will cure to form elastomeric materials which adhere well to inorganic substrates such as metal or glass and plastic materials in the case of US 4,754,013 and inorganic substrates such as metals or glass in the case of US 4,087,585, however, the onset of adhesion of these compositions to substrates is rather slow.

EP 596,534 discloses a curable polyorganosiloxane composition which exhibits initial adhesion to various substrates comprising a certain polyorganosiloxane composition which can be cured by addition reaction and a certain amount of an organosilicon compound comprising 1 to 20 mole% siloxane units with the general formula R⁴ₑR⁵₁₋ₑSiO_{3/2}, 20 to 80 mole% siloxane units with the general formula R⁴_{f}R⁵_{g}R⁶ₕSiO_{2/2} and 20 to 80 mole% units with the general formula R⁴ᵢR⁵ⱼR⁶ₖSiO_{1/2} where R⁴ represents an alkenyl group, R⁵ is a group selected from alkyl groups, alkoxyalkyl groups and epoxy-containing organic groups with the proviso that at least one of the preceding siloxane units in a molecule contains an epoxy-containing organic group as R⁵, R⁶ represents an alkoxy group having 1 to 4 carbon atoms, e, f, h and i are 0 or 1, g is an integer with a value of 0 to 2, f+g+h is 2, j is an integer with a value of 0 to 3, k is an integer with a value of 0 to 2, i+j+k is 3, with the proviso that R⁴ comprises at least 2 mole% of the total silicon-bonded organic groups in the organosilicon compound and R⁶ comprises at least 5 mole% of the total silicon-bonded organic groups in the organo-silicon compound. However, the use of such complex polyorganosiloxane compounds in the curable composition is not desirable, as these materials are difficult and expensive to make. In addition, it is taught in EP 596,534 that to achieve the required initial adhesion, the compositions need to be cured for one hour in a hot air circulation oven at 150°C. There is a desire to reduce the time required to achieve initial adhesion of curable organopolysiloxane compositions preferably without the need to use complex materials.

It is an important criterion in the industrial manufacture of certain coated substrates, for example textiles, that the coating process and subsequent adhesive bond between substrate and cured coating is achieved as rapidly as possible to meet ever increasing demands on manufacturing output. There is a need therefore to provide a curable coating composition which may be coated easily onto a suitable substrate and which is able to cure rapidly and achieve adhesion to the suitable substrate quicker than heretofore possible without adversely affecting the physical properties of the cured material.

We have now found that we can provide a curable coating composition which may easily be coated onto a suitable substrate and cure thereon with concomitant rapid onset of adhesion by using certain compounds as adhesion promoting additives.

According to the invention there is provided a curable coating composition comprising (A) a composition curable by a hydrosilylation reaction, (B) an inhibitor of said hydrosilylation reaction, (C) a resinuous silicone compound and (D) an adhesion promoting additive comprising (i) an organosilicon compound having epoxy and alkoxy functionalities, (ii) an organotitanium compound (iii) an alkenyl functional silanol terminated polyorganosiloxane and (iv) a metal chelate compound selected from acetylacetonates and aluminium chelates.

A curable coating composition according to the invention is possessed of numerous advantages. Such coating composition is able to cure and at the same time rapidly develop an adhesive bond to a variety of substrates, in particular certain synthetic textiles, for example polyesters and polyamides e.g. nylon 66. Thereafter the cured coating composition exhibits good resistance to washing; the adhesive bond to a suitable substrate is still acceptable after numerous wash cycles in hot aqueous detergent solutions.

Component (A) of a curable coating composition according to the invention is a composition curable by a hydrosilylation reaction. Operative compositions are those well known in the art which comprise an polyorganosiloxane having at least two silicon-bonded alkenyl groups per molecule, an organohydrogen siloxane having at least three silicon-bonded hydrogen atoms per molecule and a noble metal catalyst. Organopolysiloxanes having at least two silicon-bonded alkenyl groups per molecule are well known in the art and may vary from viscous materials to freely flowing liquids. It is preferred that at least some, preferably most of the organopolysiloxane having silicon-bonded alkenyl groups have a viscosity of not greater than 100 Pa.s at 25°C, more preferably 20 to 60 Pa.s at 25°C. They may be homopolymers, copolymers or mixtures thereof which comprise units of the general formula RₐR'_{b}SiO_{[4-(a+b)]/2} wherein R is a monovalent hydrocarbon group, R' is a monovalent unsaturated hydrocarbon group, a is 0, 1, 2 or 3 and b is 0 or 1 provided that a+b is not greater than 3. The organohydrogensiloxanes of component (A) are curing agents for the hydrosilylation reaction and are well known in the art. They may vary from viscous materials to freely flowing liquids. Preferred materials have a viscosity of not greater than 500 mPa.s at 25°C, more preferably 5 to 55 mPa.s at 25°C. They may be homopolymers, copolymers or mixtures thereof which comprise units of the general formula RₐH_{b}SiO_{[4-(a+b)]/2} wherein R, a and b are as hereinabove defined.

The component (A) comprises a noble metal catalyst for the reaction of the aforementioned alkenyl substituted polyorganosiloxane with the organohydrogensiloxane. The noble metal catalyst may be a rhodium or platinum containing material. Platinum catalysts are preferred and may take any of the known forms, ranging from platinum deposited onto carriers, for example, powdered charcoal, to platinic chloride, salts of platinum, chloroplatinic acids and encapsulated forms thereof. A preferred form of platinum catalyst is chloroplatinic acid either as the commonly obtainable hexahydrate or in the anhydrous form. Platinum complexes may also be used, e.g. those prepared from chloroplatinic acid hexahydrate and divinyltetramethyl disiloxane.

A curable coating composition according to the invention comprises a hydrosilylation reaction inhibitor (B). Inhibitors for hydrosilylation reactions, especially those catalysed by platinum-based catalysts, are well known in the art and may include, for example, acetylenic alcohols, dialkylmaleates, primary alcohols or mixtures thereof. A hydrosilylation reaction inhibitor is preferably present in a curable coating composition in a proportion sufficient to ensure that the coating composition cures in not less than 30 seconds at 150°C. If no hydrosilylation reaction inhibitor is present then the adhesion of the coating composition to a substrate may be negatively influenced and if the concentration of the inhibitor is too high the composition may fail to cure quickly enough. The applicant believes, although does not wish to be bound by this, that paucity of inhibitor leads to the coating composition curing so rapidly that the adhesion promoting additive is effectively trapped in the cured coating composition before sufficient quantities of the adhesion promoting additive can reach the coating substrate interface.

Silicone resin (C) may be any silicone compound having a resinous structure but is preferably a MQ resin, i.e. a resin consisting essentially of monovalent siloxane units M and tetravalent siloxane units Q and is preferably a resin consisting essentially of M units R'R₂SiO_{1/2} and R₃SiO_{1/2} and Q units SiO_{4/2} in which R and R' are as aforesaid, provided there is at least one R' group present per molecule. It is preferred that R denotes an alkyl or aryl group, preferably having from 1 to 18 carbon atoms, more preferably an alkyl group having up to 8 carbon atoms, e.g. methyl, ethyl, isopropyl, hexyl or octyl. Preferably R' is an alkenyl group having terminal unsaturation (i.e. unsaturation between the two carbon atoms which are furthest removed from the silicon atom), more preferably an alkenyl group having from 2 to 8 carbon atoms, most preferably a vinyl group, there being no more than 10% by weight of vinyl groups per molecule more preferably 1 to 5% by weight of vinyl groups per molecule. The resin may be in solid or liquid form although we prefer the ratio of the units M to the units Q to be such that the resin is a solid at ambient temperature and pressure, e.g. with a M/Q ratio of from 0.6/1 to 1.8/1, more preferably 1.2/1 to 1.6/1. Preferably the resin is provided as a 60% solution in a solvent, e.g., xylene or toluene.

Preferably the silicone resin (C) is present in a curable coating composition according to the invention as the sole reinforcing agent. The resin is chosen for its strongly reinforcing properties and the physical properties of the cured material resultant therefrom, but equally as important, the resin provides reinforcement without thickening the curable coating composition to the point where the viscosity becomes so great that it no longer has utility as a coating composition. It is a feature of this invention that a curable coating composition cannot tolerate significant amounts of other reinforcing fillers, for example fumed or precipitated silicas of surface areas above 100m²/g which have the effect of dramatically increasing the viscosity of the coating composition of this invention. Very small amounts, however, which do not significantly affect the viscosity would not be detrimental, although these reinforcing fillers are preferably avoided altogether.

Adhesion promoting additive (D) of a coating composition according to the invention comprises an organosilicon compound having epoxy and alkoxy functionalities (i). These materials are well known in the art and numerous examples of this type are described in US patent 3,455,877. The alkoxy radicals of the component (i) may be the same or different and are usually selected from alkoxy radicals having from 1 to 4 carbon atoms, for example, methoxy or ethoxy. Any other substituents, when present, are preferably selected from alkyl groups having from 1 to 8 carbon atoms. Suitable organosilicon compounds (i) are preferably low molecular weight materials, e.g. linear of branched organosiloxane polymers having no more than 10 silicon atoms per molecule. More preferred are silanes having only epoxy and alkoxy groups. The preferred epoxy-substituent alkoxysilanes are functionalised with an organic substituent bearing an epoxy group, the nature of which may vary widely. Suitable silane materials include, by way of example, 3-glycidoxypropyltrimethoxysilane, and β-(3,4 epoxycyclohexyl)-ethyltrimethoxysilane. Component (D)(i) is preferably used at concentrations of from 0.1 to 2% by weight of the total weight of a coating composition according to the invention, more preferably 0.3 to 1%. It was however found that the higher amounts are preferred where the composition is to be applied to certain textile substrates, e.g. polyester.

Component (ii) present in the adhesion promoting additive (D) is an organotitanium compound. This compound serves to catalyse reaction of the components of adhesion promoting additive (D). Component (ii) may be any organotitanium compound having organic groups attached to titanium through a titanium-oxygen-carbon linkage. The two main types of compound falling within this definition are the ortho-esters, that is the alcoholates, and the acylates in which the organic group is derived from a carboxylic acid. The organotitanium compound may also contain both alcoholate and acylate groups attached to the same titanium atom. Operative organotitanium compounds thus include those of the formula Ti(OR")₄ wherein R" is alkyl, alkoxyalkyl or acyl, for example tetra-isopropyltitanate, tetra-methoxyethoxytitanate and di-isopropyldi-acetoxytitanate. The preferred organotitanium compounds for use in this invention are the chelated or partially chelated titanium compounds. These materials are produced, for example, by reacting an alcoholate as referred to above with an α- or β-diketone or a derivative thereof. More preferred are those partially chelated titanium compounds having two alcoholate groups attached to titanium. The most preferred organotitanium compounds are those wherein the two alcoholate groups are composed of more than 3 carbon atoms, for example, bis (diethyleneglycoxy)-titanium-(2,4-pentanedionate). The presence of an organotitanium compound in the adhesion promoting additive (D) promotes the rapid onset of adhesion of the curable coating composition to suitable substrates; in addition, the ability to promote rapid onset of adhesion does not deteriorate over time. The most preferred organotitanium compounds do not produce toxic vapour by products or unpleasant odours which accompany use of certain organotitanium compounds. Component (ii) may be employed in an adhesion promoting additive (D) in a proportion of from 10 to 100 parts by weight and preferably 40 to 80 parts by weight per 100 parts by weight of component (i).

Alkenyl functional silanol terminated polyorganosiloxane (iii) of adhesion promoting additive (D) comprises units according to the general formula R²_{c}R'SiO_{(3-c)/2} and R²_{d}SiO_{(4-d)/2} wherein R² denotes an alkyl group having from 1 to 8 carbon atoms or an aryl group having from 6 to 8 carbon atoms, R' is as aforementioned, c is 1 or 2 and d is 1, 2 or 3. Preferably, component (iii) is according to the formula H-(OSiR²₂)ₙ(OSiR²R')ₘ-OH wherein R² and R' are as defined above, R' preferably having from 2 to 8 carbon atoms, n is from 1 to 6, more preferably 2 to 5 and m is from 1 to 6, more preferably 1 to 3. The most preferred material has from 10% to 15% by weight of silicon-bonded alkenyl groups, e.g., vinyl groups, per molecule. The most preferred component (iii) has a relatively low alkenyl content and will not significantly compete with the hydrosilylation reaction of component (A) of a coating composition according to the invention. Component (iii) may be employed in an adhesion promoting additive (D) in proportions of from 50 to 100 parts by weight, preferably 70 to 100 parts by weight per 100 parts of component (i).

Metal chelate compounds (iv) of adhesion promoting additive (D) enhance the adhesion promoting characteristics of additive (D). They are selected from acetyl-acetonates and aluminium chelates. Any such chelate which is compatible with the composition and which does not interfere with the hydrosilylation reaction of reagents of component (A) is suitable. Suitable acetyl-acetonates include e.g. triacetyl acetonates of aluminium, tetra-acetyl acetonates of zirconium and triacetylacetonates of iron. Aluminium chelates are preferred; for example, aluminium may be chelated with 1,3-diketones, e.g., acetylacetonate or hydroxycarboxylic acids, e.g., tartaric acid; the preferred aluminium chelate is, however, aluminium acetylacetonate. Aluminium chelates enhance and increase the rate of adhesion of a composition according to the invention to a suitable substrate. The metal chelate may be present in a composition according to the invention in proportions of from 1 to 50 parts by weight, preferably 1 to 3 parts by weight per 100 parts of component (i) or 0.004 to 0.2% by weight of the composition. However, higher levels of metal chelate impair flame resistance of curable coating compositions according to the invention.

The adhesion promoting additive (D) may be present in a curable coating composition according to the invention in an amount which is 0.1% to 3.2% by weight of the total weight of the curable coating composition.

Other adjuvants may be added to compositions according to the invention, for example, extending fillers, e.g., ground quartz, metal carbonates, pigments, catalyst inhibitors, heat stabilisers and bath life extenders.

A curable coating composition according to the invention may be formed simply by mixing the components (A),(B), (C) and (D). The curable coating composition may be provided in one part although it is preferred for storage stability reasons to provide a composition according to the invention in two or more parts, most preferably two parts. A two part composition may then be mixed in the required proportions prior to use. It is important to distribute the components over the two or more parts of the composition in the correct fashion to obtain storage stability. The compositions may accordingly be formulated in a number of ways provided that the organohydrogensiloxane and the noble metal catalyst of the component (A) are stored separately. Components (i) and (iii) are also preferably stored separately. Pre-reacted combinations of (i) and (iii) can be used. A preferred method of storing a two part composition comprises storing in a first part of the composition an alkenyl polyorganosiloxane, resin (C), a noble metal catalyst, the components (D)(ii), (iii) and (iv) optionally with an extending filler and in a second part the organohydrogensiloxane of component (A) and the organosilicon compound having epoxy and alkoxy functionalities (D)(i) with inhibitor (B). The two parts preferably combine the reactants in a way which permits mixing the two parts in a 10:1 to 5:1 weight ratio. Curable coating compositions when mixed may have a viscosity appropriate to application machinery and textiles to be coated, e.g. in the range 2 Pa.s to 20 Pa.s at 25°C. However, preferred materials have a viscosity in the range 20 to 120 Pa.s at 25°C and cure within 1 to 4 minutes at a temperature of 150°C to 180°C to provide elastomeric materials. Compositions according to the invention typically remain at workable viscosities for at least 24 hours when stored at temperatures up to 40°C.

Curable coating compositions according to the present invention are useful as coatings for a number of substrates, for example, fibrous materials, e.g., papers and textiles, glass and metals. The coating compositions of this invention are particularly suitable as coatings for synthetic textiles, for example, polyester and nylon woven fabrics.

Compositions according to the invention may be coated onto suitable substrates by those coating techniques common to the art, for example, gravure blade coating and screen printing.

According to another aspect of the invention, there is provided a method of coating a synthetic textile which comprises the steps of applying to a synthetic textile a curable coating composition according to the invention and allowing the coated composition to cure. Curing may be done by any suitable method, including heating or radiation, heating being the preferred method, preferably at temperatures of from 100 to 200°C, more preferably 140 to 180°C. One major advantage is that good adhesion is achieved after relatively short curing times, which may range from 30 seconds to an hour, preferably from 1 to 30 minutes, most preferably 1 to 15 minutes at 150°C. It is clear that an increase in curing temperature will allow the shortening of the curing time.

In yet another aspect of the invention, there is provided a synthetic textile which is coated with a curable coating composition according to the invention, and a textile which has adhered thereto a cured coating composition according to the invention.

There now follows a description of two examples which serve to illustrate the invention. All parts and percentages are by weight unless otherwise stated.

Two part curable coating compositions used in the examples were formed according to the procedure described below.

### Curable coating composition C1

Part A of a curable coating composition C1 was formed by mixing 46.2 parts of a vinyl end-blocked polydimethylsiloxane having a viscosity of 55 Pa.s at 25°C and a vinyl content of 0.08%, 17.1 parts of a hydrophobic polysilicate resin having vinyldimethyl siloxane units, 0.1 part of a platinum complex catalyst containing 0.63% w/w platinum, 30.9 parts of ground quartz and 5 parts of calcium carbonate.

Part B of a curable coating composition C1 was formed by mixing 54.8 parts of a vinyl end-blocked polydimethylsiloxane having a viscosity of 0.45 Pa.s at 25°C, 40.5 parts of a crosslinker comprising an organohydrogensiloxane having at least three silicon-bonded hydrogen atoms per molecule and a viscosity of 32 mPa.s at 25°C and 0.4 parts of ethynylcyclohexanol as an inhibitor.

Part A and Part B were mixed in a 10:1 weight ratio to form the curable coating composition C1. This composition contains no adhesion promoting additive and serves as a comparative composition.

### Curable coating composition C2

0.45 parts of a dimethyl methylvinyl siloxy silanol end-blocked copolymer having a hydroxyl content of 9% and a vinyl content of 10% by weight was mixed with 100 parts of part A as described above to form a part A2.

4.5 parts of epoxypropyl trimethoxysilane was mixed with 100 parts of part B as described above to form a part B2.

Part A2 and part B2 were mixed in a 10:1 weight ratio to form a curable coating composition C2, which contains no organotitanium or metal chelate compound and thus also serves as a comparative composition.

### Curable coating composition C3

0.25g of bis (ethyleneglycoxy)-titanate-(2,4,pentane-dionate) was mixed with 100 parts of part A2, as described above to form a part A3 and the resultant mixture mixed in a 10:1 weight ratio with part B2 as described above to form a curable coating composition C3, which contains no metal chelate in the adhesion promoting additive.

### Curable coating composition C4

A part B4 was formed according to the method of B2 except that the ethynylcyclohexanol inhibitor was omitted. To 100 parts of part A3 as described above, was added 1.4 parts of aluminium acetyl acetonate in toluene to form part A4, of which 100 parts were mixed with 9.96 parts of part B4 to form a curable coating composition C4, which does not contain a hydrosilylation reaction inhibitor and serves as a comparative composition.

### Curable coating composition 1

100 parts of part A4, as described above, were mixed in a 10:1 weight ratio with part B2 to form a curable coating composition 1, which is illustrative of the invention.

### Curable coating composition 2

Curable coating composition 2 was prepared by adding 0.4 parts of epoxypropyltrimethoxysilane to 100 parts of composition 1, and is also illustrative of the invention.

### Curable coating composition 3

Curable coating composition 3 was prepared by adding 0.4 parts of the epoxypropyltrimethoxysilane plus 0.4 parts of the dimethylmethylvinylsiloxysilanol end-blocked copolymer to 100 parts of composition 1, and is also illustrative of the invention.

### EXAMPLE 1

1.2 parts of each of the curable coating compositions 1 and C1 to C4 were pipetted onto a substrate consisting of a piece of woven nylon fabric (4cm x 4cm) partially over-laid with a piece of release paper (2cm x 4cm) such that the sample coated both the nylon fabric and the release paper. The coatings thus deposited were then heated in an oven at 150°C in order to effect cure and adhesion to the substrate. Upon removal from the oven the coated release paper was lifted from the nylon fabric and gripped by an operator at 90° to the coated nylon fabric surface. Each coating in turn was then slowly hand pulled from the nylon surface until the entire coating was removed or the coating broke.

The quality of adhesion of a coating to the nylon fabric was assessed by determining the failure mode when the coating was removed. The area of nylon, from which the coating was removed, was inspected and if 50% or more was still covered by cured elastomeric material, the failure was deemed "cohesive". All compositions cured in less than 1 minute but in most cases adhesion only developed after longer periods.

The tests were carried out repeatedly to determine the minimum time required for cohesive failure to occur. Table I contains the findings for compositions 1, C1, C2, C3 and C4.

**TABLE I:**

| Quality of adhesion of curable coating compositions | | | |
|---|---|---|---|
| Composition | Time^{a} | Cure | Cohesive Failure |
| 1 | 1 | yes | yes |
| C1 | 35 | yes | no^{b} |
| C2 | 8 | yes | no^{b} |
| C2 | 10 | yes | yes |
| C3 | 1 | yes | no^{b} |
| C3 | 3 | yes | yes |
| C4 | 35 | yes | no^{b} |

| | | | |
|---|---|---|---|
| a = Residence time in oven at 150°C in minutes. | | | |
| b = Total adhesive failure. | | | |

### EXAMPLE 2

The curable coating compositions 1, 2, 3, C1 and C3 were each coated onto a polyester textile. The coatings were cured for 15 minutes at 150°C. The coated textile samples were then boil washed in 5% w/w aqueous solutions of detergent powder (Persil®) for up to 8 hours. The adhesive peel strength as measured by a 180°C Peel Test for each sample before washing, after 5 hours and after 8 hours. The results are shown in Table II.

**TABLE II:**

| Effect of washing on adhesive strength | | | |
|---|---|---|---|
| | Peel Strength (N/cm) | | |
| Composition | Pre wash | 5h | 8h |
| 1 | 6.8 | 1.4 | 1.1 |
| 2 | 10.8 | 8.5 | 5.7 |
| 3 | 12.6 | 9.2 | 4.8 |
| C1 | NM | NM | NM |
| C3 | 3.8 | 1.3 | 0.6 |

| | | | |
|---|---|---|---|
| NM : Force was too low to be measured. | | | |

From the examples, it is clear that coating compositions according to the invention have excellent adhesion after a very short curing time.

## Claims

1. A curable coating composition comprising (A) a composition curable by a hydrosilylation reaction, (B) an inhibitor of said hydrosilylation reaction, (C) a resinous silicone compound and (D) an adhesion promoting additive **characterised in that** the adhesion promoting additive comprises (i) an organosilicon compound having epoxy and alkoxy functionalities, (ii) an organotitanium compound, (iii) an alkenyl functional silanol terminated polyorganosiloxane and (iv) a metal chelate compound selected from acetylacetonates and aluminium chelates.

2. A curable coating composition according to Claim 1 further **characterised in that** the metal chelate compound (iv) is an aluminium chelate compound.

3. A curable coating composition according to Claim 1 or Claim 2 further **characterised in that** the organotitanium compound (ii) is selected from alcoholates and acylates of titanium.

4. A curable coating composition according to any preceding claim, further **characterised in that** the organotitanium compound (ii) is a partially chelated titanium compound having two alcoholate groups attached to titanium.

5. A curable coating composition according to any preceding claim further **characterised in that** the silicone compound (C) is a resin consisting essentially of monovalent siloxane units M of the formulae R'R₂SiO_{1/2} and R₃SiO_{1/2} and tetravalent siloxane units Q of the formula SiO_{4/2} wherein R denotes a monovalent hydrocarbon group and R' denotes a monovalent unsaturated hydrocarbon group, provided the resin has at least one R' group per molecule.

6. A curable coating composition according to any preceding claim further **characterised in that** the alkenyl functional silanol-terminated polyorganosiloxane (D)(iii) is according to the formula H-(OSiR^{a}₂)ₙ(OSiR^{a}R')ₘ-OH wherein R^{a} is an alkyl group having from 1 to 8 carbon atoms or an aryl group having 6 to 8 carbon atoms, R' is an alkenyl group having from 2 to 8 carbon atoms, n is from 1 to 6 and m is from 1 to 6.

7. A curable coating composition according to any preceding claim further **characterised in that** the weight ratio of (D)(i):(D)(iii) is from 1:1 to 2:1.

8. A method of coating a synthetic textile **characterised in that** a curable coating composition according to any preceding claim is applied to a synthetic textile and the coating composition is allowed to cure.

9. A textile which has adhered thereto a cured coating composition according to any one of the Claims 1 to 7.

## Patentansprüche

1. Härtbare Beschichtungszusammensetzung, enthaltend (A) eine Zusammensetzung, die durch eine Hydrosilylierungsreaktion härtbar ist, (B) einen Inhibitor für besagte Hydrosilylierungsreaktion, (C) eine harzartige Siliconverbindung und (D) ein Haftvermittlungsadditiv, **dadurch gekennzeichnet, dass** das Haftvermittlungsadditiv (i) eine Organosiliciumverbindung mit Epoxy- und Alkoxyfunktionalitäten, (ii) eine Organotitanverbindung, (iii) ein alkenylfunktionelles silanolterminiertes Polyorganosiloxan und (iv) eine Metallchelatverbindung, ausgewählt aus Acetylacetonaten und Aluminiumchelaten, enthält.

2. Härtbare Beschichtungszusammensetzung nach Anspruch 1, weiterhin **dadurch gekennzeichnet, dass** die Metallchelatverbindung (iv) eine Aluminiumchelatverbindung ist.

3. Härtbare Beschichtungszusammensetzung nach Anspruch 1 oder 2, weiterhin **dadurch gekennzeichnet, dass** die Organotitanverbindung (ii) aus Alkoholaten und Acylaten von Titan ausgewählt ist.

4. Härtbare Beschichtungszusammensetzung nach einem der vorstehenden Ansprüche, weiterhin **dadurch gekennzeichnet, dass** die Organotitanverbindung (ii) eine partielle Chelattitanverbindung mit zwei Alkoholatgruppen, die an Titan gebunden sind, ist.

5. Härtbare Beschichtungszusammensetzung nach einem der vorstehenden Ansprüche, weiterhin **dadurch gekennzeichnet, dass** die Siliconverbindung (C) ein Harz ist, das im wesentlichen aus monovalenten Siloxaneinheiten M der Formeln R'R₂SiO_{1/2} und R₃SiO_{1/2} und tetravalenten Siloxaneinheiten Q der Formel SiO_{4/2} besteht, worin R eine monovalente Kohlenwasserstoffgruppe bedeutet und R' eine monovalente ungesättigte Kohlenwasserstoffgruppe bedeutet, unter der Voraussetzung, dass das Harz mindestens eine R'-Gruppe pro Molekül aufweist.

6. Härtbare Beschichtungszusammensetzung nach einem der vorstehenden Ansprüche, weiterhin **dadurch gekennzeichnet, dass** das alkenylfunktionelle silanolterminierte Polyorganosiloxan (D) (iii) der Formel H-(OSiR^{a}₂)ₙ(OSiR^{a}R')ₘ-OH entspricht, worin R^{a} eine Alkylgruppe mit 1 bis 8 Kohlenstoffatomen oder eine Arylgruppe mit 6 bis 8 Kohlenstoffatomen ist, R' eine Alkenylgruppe mit 2 bis 8 Kohlenstoffatomen ist, n von 1 bis 6 reicht und m von 1 bis 6 reicht.

7. Härtbare Beschichtungszusammensetzung nach einem der vorstehenden Ansprüche, weiterhin **dadurch gekennzeichnet, dass** das Gewichtsverhältnis von (D)(i):(D)(iii) von 1:1 bis 2:1 reicht.

8. Verfahren zur Beschichtung eines synthetischen Textils, **dadurch gekennzeichnet, dass** eine härtbare Beschichtungszusammensetzung nach einem der vorstehenden Ansprüche auf ein synthetisches Textil aufgetragen wird und man die Beschichtungszusammensetzung härten lässt.

9. Textil, das daran haftend eine gehärtete Beschichtungszusammensetzung nach einem der Ansprüche 1 bis 7 aufweist.

## Revendications

1. Composition de revêtement durcissable comprenant (A) une composition durcissable par une réaction d'hydrosilylation, (B) un inhibiteur de ladite réaction d'hydrosilylation, (C) un composé de silicone résineux et (D) un additif favorisant l'adhérence, **caractérisée en ce que** l'additif favorisant l'adhérence comprend (i) un composé d'organosilicium ayant des fonctions époxy et alcoxy, (ii) un composé d'organotitane, (iii) un polyorganosiloxane terminé par un silanol à fonction alcényle et (iv) un chélate métallique choisi parmi des acétylacétonates et des chélates d'aluminium.

2. Composition de revêtement durcissable selon la revendication 1, **caractérisée en outre en ce que** le chélate métallique (iv) est un chélate d'aluminium.

3. Composition de revêtement durcissable selon la revendication 1 ou la revendication 2, **caractérisée en outre en ce que** le composé d'organotitane (ii) est choisi parmi des alkylates et des acylates de titane.

4. Composition de revêtement durcissable selon l'une quelconque des revendications précédentes, **caractérisée en outre en ce que** le composé d'organotitane (ii) est un composé de titane partiellement chélaté ayant deux groupes alkylate liés au titane.

5. Composition de revêtement durcissable selon l'une quelconque des revendications précédentes, **caractérisée en outre en ce que** le composé de silicone (C) est une résine constituée essentiellement d'unités de siloxane monovalent M ayant les formules R'R₂SiO_{1/2} et R₃SiO_{1/2} et d'unités de siloxane tétravalent Q de formule SiO_{4/2}, dans lesquelles R représente un groupe hydrocarboné monovalent et R' représente un groupe hydrocarboné insaturé monovalent, à condition que la résine ait au moins un groupe R' par molécule.

6. Composition de revêtement durcissable selon l'une quelconque des revendications précédentes, **caractérisée en outre en ce que** le polyorganosiloxane terminé par un silanol à fonction alcényle (D) (iii) correspond à la formule H-(OSiR^{a}₂)ₙ(OSiR^{a}R')ₘ-OH dans laquelle R^{a} est un groupe alkyle de 1 à 8 atomes de carbone ou un groupe aryle de 6 à 8 atomes de carbone, R' est un groupe alcényle de 2 à 8 atomes de carbone, n est compris entre 1 et 6 et m est compris entre 1 et 6.

7. Composition de revêtement durcissable selon l'une quelconque des revendications précédentes, **caractérisée en outre en ce que** le rapport en masse (D)(i) : D(iii) est compris entre 1:1 et 2:1.

8. Procédé de revêtement d'un textile synthétique, **caractérisé en ce que** l'on applique une composition de revêtement durcissable selon l'une quelconque des revendications précédentes sur un textile synthétique et on laisse durcir la composition de revêtement.

9. Textile sur lequel est collée une composition de revêtement durcie selon l'une quelconque des revendications 1 à 7.
